# EUROPEAN PATENT SPECIFICATION

(11) **EP 4 059 873 B1**
(45) Date of publication and mention of the grant of the patent: **13.12.2023**
(21) Application number: 22162391.1
(22) Date of filing: 16.03.2022
(51) Int. Cl.: B65G 69/00

(54) **A LOADING BAY**
LADEBUCHT
BAIE DE CHARGEMENT

(30) Priority: 18.03.2021 IT 202100006449
(43) Date of publication of application: 21.09.2022
(73) Proprietor: I.T.A.L. - T.V.T. S.r.l., 48018 Faenza (RA) (IT)
(72) Inventor: TARDUCCI, MATTEO, FAENZA (RA) (IT)
(74) Representative: Dall'Olio, Christian

(56) References cited:
- WO-A1-2014/125040
- FR-A1- 2 840 575
- US-A1- 2003 007 850

## Description

The present invention relates to the technical sector of constructions and logistics, and in particular concerns a loading bay.

Loading bays facilitate the loading and/or unloading operations to and from a warehouse to a motor vehicle as they facilitate the passage of the operators and/or of the loading and/or unloading means from the warehouse to the load floor of a motor vehicle, typically a vehicle for transport of goods which often comprises a tractor and a trailer.

Loading bays comprise a parking lot for accommodating a motor vehicle and a platform which is raised with respect to the parking lot, typical by 1.20 metres. Platforms generally comprise crossings which are configured to enable transit of means and/or persons in an open condition and to prevent transit of means and/or persons in a closed condition. Usually a crossing comprises containment means, such as for example a sectional door and/or a movable footplate which enables connecting the floor of the platform with the load floor. In the open condition, the movable footplate, as is known, can be above the load floor by a few centimetres. Regardless of the type of crossing used, the possibility of transiting in safety is lacking should the motor vehicle move or increase the distance between the load floor and the platform. For example, a not-rare case is when the drivers advance before the truck being used for the loading and unloading has returned onto the platform, causing the fall of the truck and, possibly, injury to the operator. Like incidents occur with a not-insignificant frequency, also because the loading and unloading operations take place in a pressured and frenetic manner.

Numerous devices, or retention systems, or immobilisation modalities of the motor vehicles have been developed, with the aim of dealing with the issues deriving from the use of a raised platform. These range from completely manual devices, such as wedges or wheel chocks, to semi-automatic systems that interpose obstacles in proximity of the wheels without traction or which block the wheels without traction. Like solutions in the prior art present numerous drawbacks because they require precision in the positioning of the motor vehicle or manual interventions. For example, the wedges must be manoeuvred by the operator at the start and end of the loading and unloading operations and might be removed early to reduce the times necessary for restarting the motor vehicle. The existing semi-automatic systems do not take into due consideration the traction capacity of the drive axle and the elasticity of the tyre. The above elements can however enable displacements of a few centimetres and/or the blocking of the passage and/or hazardous stresses on the retention system, which in general is applied only on one side of the motor vehicle. International patent application WO2014125040A1, as well as the documents cited in the relative search report, demonstrate some realisations of loading bays with retention systems. Another example is described in patent application FR2840575A1, which discloses the preamble of claim 1 and describes a plurality of rollers configured to contact the wheels of a parked motor vehicle and which pass from a blocked condition, in which they enable movement of the motor vehicle, to an idle condition, in which they guarantee the retaining of the motor vehicle. The solution of FR2840575A1 comprises an electromagnetic device controlled by the operator which receives electrical energy so as to make the rollers idle, thus activating the safety condition for the means and/or the operators. The application of the solution of FR2840575A1 in existing loading bays requires the lifting of the platform.

A first aim of the present invention is to provide a retention system of a loading bay which guarantees very good safety, obviating the critical points of the solutions of the prior art.

A second aim is to ensure precise control of the operation.

A further aim of some embodiments is to obviate the drawbacks of the prior art solutions due to human intervention.

A further aim of some embodiments is to facilitate the installation and/or maintenance of the loading bay.

These and other aims, which will be obvious to the expert in the sector from a reading of the following text, are attained by means of a loading bay according to claim 1.

In accordance with the teachings of the present document, the loading bay comprises a parking lot configured to accommodate a motor vehicle with a load floor and drive wheels, a platform which is raised with respect to the parking lot and a retention system. The retention system comprises one or more movable parts arranged in the parking lot and distanced from the platform so as to support all the drive wheels of the motor vehicle in the parking lot, the one or more movable parts being movable in a first condition, so as to limit or prevent a distancing of the load floor from the platform, and being blocked in a second condition, so as to enable the movement of the motor vehicle.

The retention system further comprises a first gear, transmission means which connect the rotation of the first gear and the movement of at least a movable part and blocking means which exert an opposing force upon rotation of the first gear.

The blocking means comprise a second gear and a hydraulic or pneumatic cylinder which translates the second gear from a first position in which it is disengaged from the first gear and a second position in which it is engaged to the first gear:
- in the first condition the second gear is in the first position;
- in the second condition the second gear is in the second position and the hydraulic or pneumatic cylinder opposes the displacement of the second gear induced by the first gear.

Specific embodiments of the invention will be described in the following part of the present description, according to what is set down in the claims and with the aid of the accompanying figures, in which:
- figure 1 is a perspective view from above of an embodiment of a module of a retention system of a loading bay according to the invention;
- figure 2 is a perspective view of the module of figure 1 from below;
- figures 3 and 4 are perspective views from other points of view of the module of figure 1, with some elements not included;
- figure 5 is a view from above of an embodiment of a part of a retention system of a loading bay according to the invention;
- figures 6 and 7 are perspective views of details of the module of figure 1;
- figure 8 is a partial view from above of an embodiment of a system with two loading bays according to the invention;
- figures 9 and 10 are lateral views of a further embodiment of a loading bay according to the invention;
- figure 11 is a view from above of a further embodiment of a system with two loading bays according to the invention;

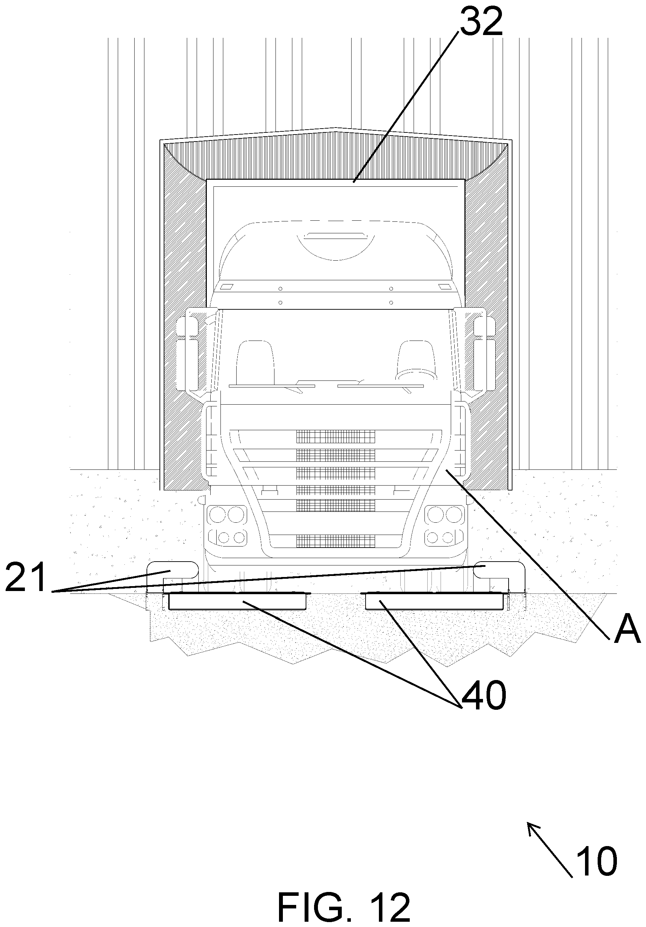

- figure 12 illustrates a frontal view of the loading bay to the left in figure 8.

With reference to the appended figures, reference numeral (10) denotes a loading bay for enabling loading and/or unloading of motor vehicles (A) with a load floor and drive wheels.

An embodiment of the loading bay (10) comprises a parking lot (2) configured to accommodate a motor vehicle with a load floor and drive wheels, a platform (3) which is raised with respect to the parking lot (2) and a retention system (4) of the motor vehicle.

The retention system (4) comprises one or more movable parts (5) arranged in the parking lot (2) and distanced from the platform (3) so as to support all the drive wheels of the motor vehicle (A) in the parking lot (2).

The one or more movable parts (5) are movable in a first condition, so as to limit or prevent a distancing of the load floor from the platform (3), and are blocked in a second condition, so as to enable the movement of the motor vehicle (A).

In the first condition, the eventual activation of the drive wheels sets in movement the one or more movable parts (5) so that the advancement force is insufficient to move the motor vehicle (A) from the parking lot (2). In other words, the one or more movable parts (5) are substantially idle in the first condition while they are substantially blocked in the second condition.

The retention system (4) comprises a first gear (6), transmission means (7) which connect the rotation of the first gear (6) and the movement of at least a movable part (5), and blocking means (9) which exert an opposing force upon rotation of the first gear (6).

The transmission means (7) thus enable controlling the movement of the at least a movable part (5) on the basis of the possibility of the first gear (6) to rotate.

The blocking means (9) advantageously comprise a second gear (94) and a hydraulic or pneumatic cylinder (91) which translates the second gear (94) between a first position in which it is disengaged from the first gear (6) and a second position in which it is engaged to the first gear (6).

In the first condition of the one or more movable parts (5) the second gear (94) is in the first position while in the second condition the second gear (94) is in the second position and the hydraulic or pneumatic cylinder (91) opposes the displacement of the second gear (94) induced by the first gear (6).

The loading bay (10) of the invention prevents undesired distancing of the load floor from the platform (3) and the consequent risks of incidents which might involve vehicles and/or persons and/or materials involved in the operations of loading and/or unloading.

The blocking means (9) are configured to guarantee maximum safety, including in the case of a loss of electrical energy or other energy sources necessary for the functioning, the opposite to what happens, for example, in the case described in FR2840575A1. In fact, the first position is a stable position as it is necessary to supply energy to the hydraulic or pneumatic cylinder (91) to translate the second gear (94) from the first position to the second position.

Further, the hydraulic or pneumatic cylinder (91) is an extremely reliable component, easy to source, and can be easily dimensioned so as to respond to the specific needs of the loading bay (10), especially by virtue of the power of the motor vehicles (A) for which the loading bay (10) is conceived.

As the position of the second gear (94) depends on the translation imparted by the hydraulic or pneumatic cylinder (91), in other words by the stroke of the rod, the blocking means (9) of the invention enable easy control of the operating status. The one or more movable parts (5) are preferably arranged with respect to the platform (3) so as exclusively to support the drive wheels of the motor vehicle (A) so as not to set the other wheels in motion.

A plurality of configurations of the blocking means (9) is possible which enable the hydraulic or pneumatic cylinder (91) to oppose the displacement of the second gear (94) induced by the first gear (6).

For example, in a first version that is not illustrated, the first gear (6) is a gearwheel and the second gear (94) is a rack arranged according to the translation direction (X) of the hydraulic or pneumatic cylinder (91). Once the hydraulic or pneumatic cylinder (91) has translated the rack up to engaging the first gear (6), the rotation of the first gear is prevented by the fluid present in the thrust chamber of the hydraulic or pneumatic cylinder (91).

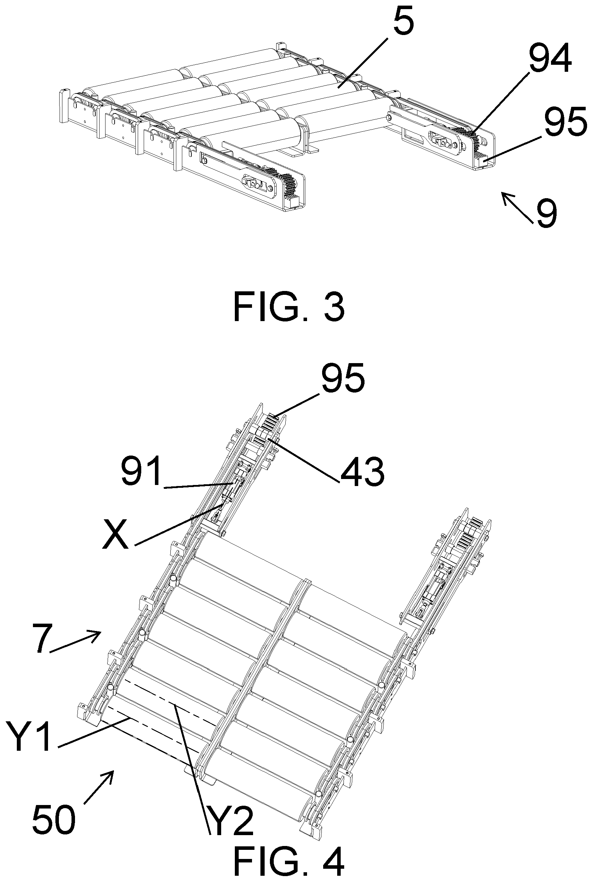

In the version illustrated in the accompanying figures, the blocking means (9) comprise a first rack (95) arranged according to the translation direction (X) of the hydraulic or pneumatic cylinder (91), the first gear (6) is a first gearwheel and the second gear (94) is a second gearwheel which engages the first rack (95). To better demonstrate the functioning of the retention system (4) the first gearwheel and the second gearwheel are not illustrated in figure 4.

In the second position, the contemporary engagement of the first rack (95) and the first gear (6) enables unloading, on the hydraulic or pneumatic cylinder (91), at least partially, any eventual stresses induced by the drive wheels on the second gear (94), through the one or more movable parts (5), the transmission means (7) and the first gear (5).

The retention system (4) is preferably configured so that at least the passage from the second condition to the first condition takes place automatically. It is thus possible to operate the loading bay (10) in safety regardless of the intervention of the operators.

The platform (3) preferably comprises a crossing (31) which is configured to enable transit of means and/or persons in an open condition and to prevent transit of means and/or persons in a closed condition. The hydraulic or pneumatic cylinder (91) is advantageously configured to translate the second gear (94) into the first position when the crossing (31) passes from the closed condition to the open condition.

The crossing (31) is typically located at an end of the platform (3) so that it faces onto the load floor of the motor vehicle (A). The crossing (31) can be made in various ways, for example according to solutions in the prior art. Some of these make use of barriers such sectional doors (32) and/or movable containment nets and/or movable barriers. Also used are movable footboards (33), with various structures, which enable connecting the platform (3) to the load floor of the motor vehicle (A); often the crossing comprises a barrier and a movable footplate (33), as represented by way of example in figures from 8 to 11.

The automation in the passage to the first condition guarantees a high level of safety as it prevents human errors typical of the concerted steps of loading and/or unloading. Further, there is no possibility that an operator, for example the warehouse operative or the driver, will fail to activate the retention system (4) or tamper with it to save time or to avoid attending to the situation.

With the aim of attaining excellent safety levels, the crossing (31) preferably comprises a sectional door (32), wherein the retention system (4) comprises a detector (81) which detects the opening and closing of the sectional door (32) so that the hydraulic or pneumatic cylinder (91) translates the second gear (94) on the basis of the detection of the detector (81). The displacement of the second gear (94) on the opening of the sectional door (32) prevents accidents from taking place as it distinguishes the moment from which a fall from the platform (3) to the parking lot (2) can take place. The detector (81) is often an endrun stop and, for example, can be a piston or lever microswitch.

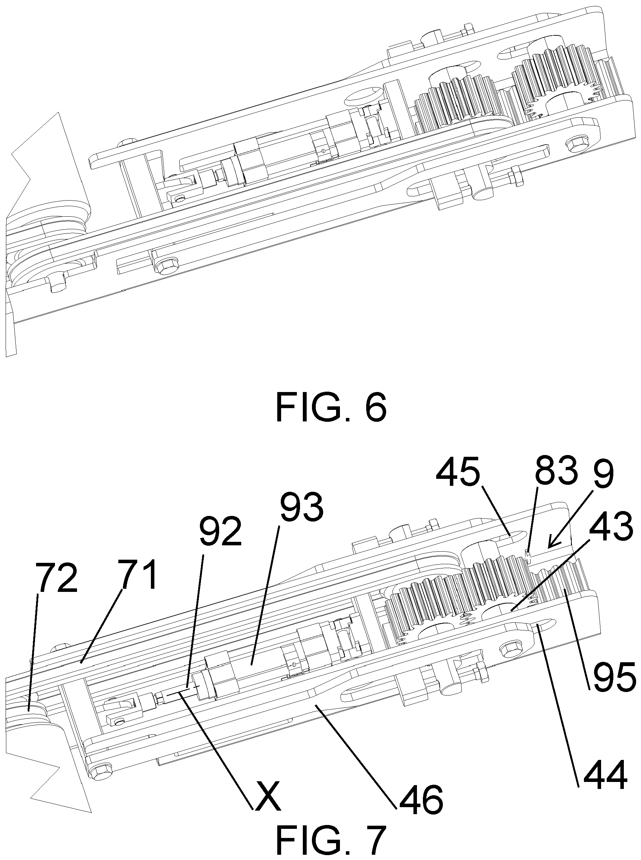

As the blocking means (7) are subject to malfunctioning, it is preferable for the retention system (4) to comprise an alarm (82) and a sensor (83) which detects the position of the second gear (94) and wherein the alarm (82) is configured to activate when in the first condition the second gear (94) is not in the first position. The activation of the alarm enables the operators to activate immediately to set off the necessary corrective actions. The sensor (83), which can be of known type, is illustrated only in figure 7, in the embodiment of a photocell which verifies the presence of the axle (43) in the first position.

The one or more movable parts (5) are generally arranged in the parking lot (2) at a distance from the platform (3) which is such as to cover an array of possible positions of the drive wheels of the motor vehicles (A) which can accede to the load platform (10), once the motor vehicle (A) is positioned with respect to the platform (3).

The one or more movable parts (5) can comprise, for example, one or more tracks and/or one or more rollers and/or one or more belts or mats. In the embodiment of the accompanying figures a plurality of rollers (50) is used which guarantees the support of the drive wheels in a wide area about the design positions of the drive wheels, so as to guarantee the functioning of the retention system (4) independently of how the motor vehicle (A) has been parked.

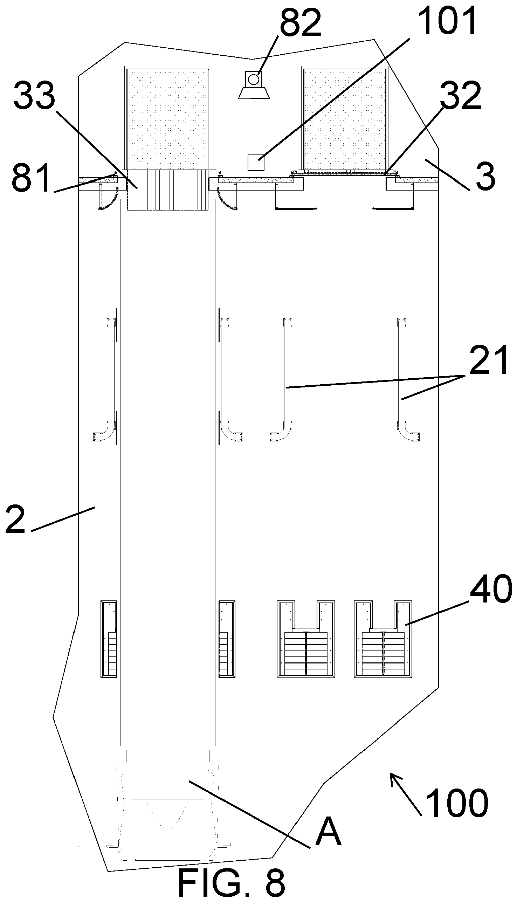

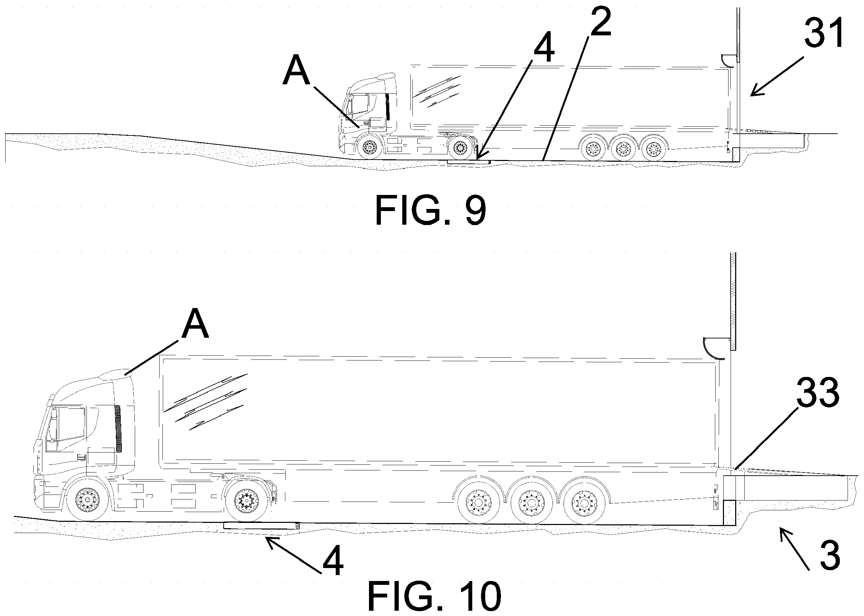

For example figure 3 illustrates two roller planes that, once installed, guarantee the functioning of the retention system (4) over a sizable area, as visible in figures 8 and 10.

The one or more movable parts (5) can be positioned above the parking lot (2), creating appropriate ramps with the purpose of limiting the presence of steps, or be positioned internally of an undercut. In both cases it is preferable for them to be positioned so as to determine a slope unfavourable to the moving away of the motor vehicle (A) from the platform (3), so as to require a greater force of the drive axle of the motor vehicle (A) and increase safety during the loading and/or unloading operations.

The loading bay (10) preferably comprises guides (21) for guiding the wheels of the motor vehicle (A) so as to guarantee a better positioning with respect to the one or more movable parts (5). In the case of a plurality of rollers (50), it is preferable for the guides (21) to extend in an orthogonal direction to the rotation axes (Y1, Y2) of the plurality of rollers (50) so as to place the drive wheels in the same orthogonal direction, i.e. in the best condition for the functioning of the rollers and, therefore, for the safety of the loading bay (10).

The transmission means (7) are generally configured to have a constant transmission ratio so as to be certain of the blocking of the one or more movable parts (5) when the first gear (6) is blocked. Although cogged wheels, racks or cogged belts could be used, geared elements or chains are preferable.

In the case of a plurality of movable parts (5), for example a plurality of rollers (50), it can be preferable for the configuration of the transmission means (7) to be such as to make a part of the movable parts (5) movable in the event of one or more breakages of the transmission means (7). It is therefore preferable for the transmission means (7) to comprise a first chain (71) which connects a first roller (51) of the plurality of rollers (50) to the first gear (6) and a second chain (72) which connects the first roller (51) to a second roller (52) of the plurality of rollers (50), as can be observed, by way of example, in figure 7. More preferably, still with reference to the case of the rollers by way of example, the transmission means (7) comprise one or more second chains that connect the rollers of the plurality of rollers (50) in couples. In the event of a chain breakage, one or more rollers become movable, thus placing the loading bay (10) in a safety condition.

The activations of the hydraulic or pneumatic cylinder (91) are of known type. The hydraulic or pneumatic cylinder (91) is preferably a hydraulic cylinder which, owing to the presence of a non-compressible fluid in the thrust chamber, guarantees stability in maintaining the position of the second gear (94).

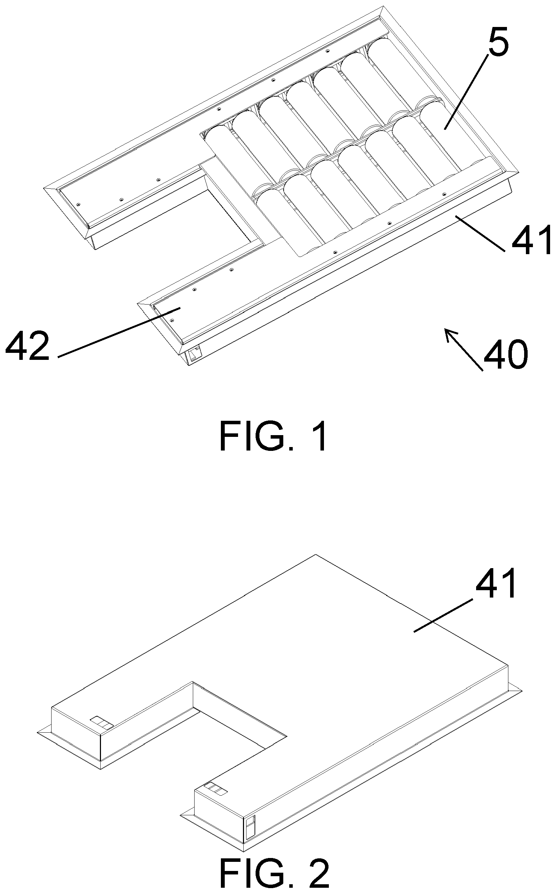

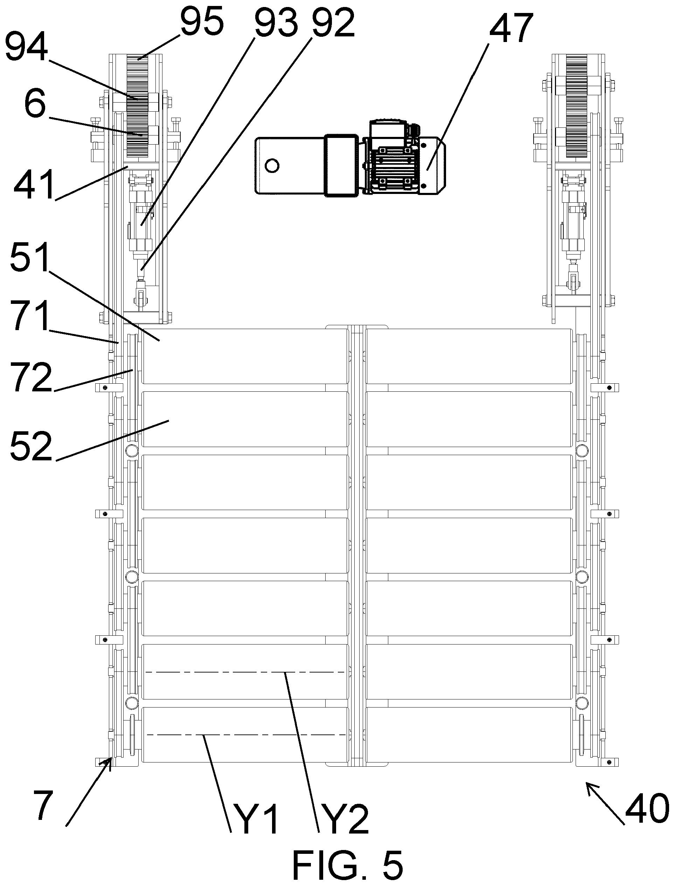

The configurations of the retention system (4) can be many, for example the one or more movable parts (5) can be connected to a single first gear (6) or further first gears can be included, as can be observed in the embodiments of figure 1 and figure 5.

Likewise the blocking means (9) can also comprise only one second gear (94) or only one hydraulic or pneumatic cylinder (91) or a plurality of further second gears and hydraulic or pneumatic cylinders according to a plurality of combinations. Further, the retention system (4) might also comprise prior art devices, for example of the type describe in the documents cited in the foregoing.

In general it is preferred for each drive wheel to correspond to a group of movable parts of the one or more movable parts (5) with each group connected to a respective first gear (6). For example, in figure 8 each loading bay (10) comprises four groups of rollers connected to respective four first gears (6), arranged in couples internally of two modules (40).

The modules (40) facilitate the production and installation but are not strictly necessary. The retention system (4) preferably comprises two or more modules (40), each serving one or due drive wheels.

Each module (40) can be provided with autonomous fluid providing means under pressure, typically hydraulic oil or air, or the means can serve a plurality of modules (40). The means in general comprise a motor (47) associated to a pump or a compressor, as schematically illustrated in figure 5 which shows a module (40) that is entirely alike the one of figure 1 but with a frame (41) that is different and with the fluid providing means under pressure.

The embodiments of the modules (40) visible in figures 1 and 5 replicate on two sides the plurality of rollers (50), the transmission means (7), the hydraulic or pneumatic cylinder (91), the first gear (6), second gear (94) and the first rack (95). In this way the retention system (4) adapts to motor vehicles (A) provided with four wheels on the drive axle, as more clearly illustrated in figure 8.

The expert in the sector will understand how the teachings of the present description are actuable by both installing and directly mounting the various components *in situ,* for example by installing the roller planes on site with the concrete floor, and arranging groups of components or modules (40).

Regardless of the presence of one or more modules (40), the retention system (4) preferably comprises a cover (42) and a frame (41) which rotationally supports the first gear (6) and the one or more movable parts (5) connected to the first gear (6) by the transmission means (7) and the hydraulic or pneumatic cylinder (91) comprises a movable part (92) connected to the second gear (94) and a fixed part (93) which is solidly constrained to the frame (41). Further, the frame (41) comprises a tub-shaped part which is sunk into the parking lot (2) with an open side thereof facing upwards and the first gear (6) and the blocking means (9) are arranged between the cover (42) and the tub-shaped part so as to be in view with the cover (42) removed. In the case of the modules (40) of figures 1 and 5, the frame (41) structure is replicated on the other side.

Regardless of the subdivision into modules (40) of the retention system (4), if there is at least a first rack (95), it is preferable that the frame (41), as well as being solidly constrained to first rack (95) and rotationally supporting the first gear (6) and the one or more movable parts (5) connected to the first gear (6) by the transmission means (7), comprises a first slot (44) and a second slot (45) which extend in the translation direction (X) of the hydraulic or pneumatic cylinder (91) and which accommodate an axle (43), generally at the ends thereof, which bears the second gearwheel. In this way it is possible to guarantee a good coupling between the second gear (94) and the first rack (95).

Further, the retention system (4) preferably comprises a connecting bar (46) which is rotationally connected to the axle (43) and to the movable part (92) of the hydraulic or pneumatic cylinder (91) so as to compensate for any displacements that are orthogonal with respect to the translation direction (X). In other words the hydraulic or pneumatic cylinder (91) comprises a fixed part (93) which is solidly constrained to the frame (41) and a movable part (92) which is rotationally connected to the connecting bar (46). More preferably, the hydraulic or pneumatic cylinder (91) is also associated to one or more guides that extend according to the translation direction (X), as can for example be observed in figure 6.

The loading bay (10), or the system (100) where it is installed, comprises a control unit (101) which is programmed or configured so as to guarantee the functioning illustrated in the preset description. In general this is a small electrical command panel positioned in a well-visible place to the operator and connected to one or more alarms (82), for example visual and/or acoustic.

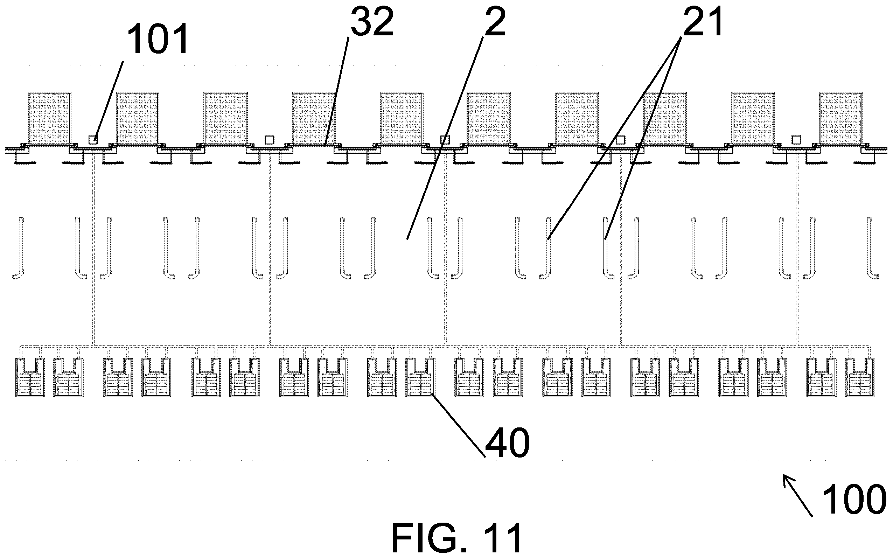

The above teachings can be applied to a system (100) which comprises a plurality of loading bays (10) with the possibility of integrations and rationalisations of the components. A first example is provided in figure 8 where two loading bays (10) share a same control unit (101), a second example is provided in figure 11, where each of the control units (101) again manages two loading bays (10) and the loading bays (10) are connected to fluid providing means under pressure (not illustrated) of a centralised type.

Once more, in figure 8, the two loading bays (10) share the alarm (82), which alarm is schematically represented by way of example as a flashing light and a siren.

Figure 9 and figure 10 enable observing an example of how it is preferable for the parking lot (2), or the access lane to the parking lot (2), on the side of the one or more movable parts (5) opposite the platform (3), to have a slight slope which opposes the moving away of the load floor of the motor vehicle (A) from the platform (3), alike to what is described for the one or more movable parts (5). The slope can if desired be realised during the installation of the retention system (4).

The teachings of the invention are easily also applicable for improving the safety of loading bays (10) or systems (100), such as for example logistic platforms, already in existence. For example, with reference to figure 10, for the installation of the retention system (4) on an existing system (100) it is sufficient to create the housings for the modules (40), make the tracks towards the platform (3) and install one or more control units, fluid providing means under pressure and the other components of the invention. The modules (40) according to the invention and/or the tub-shaped frame (41) facilitate the introduction of the retention system (4) in existing solutions as they do not cause the lifting of the load floors with respect to the platform (3), at least in proximity of the platform (3). This is because usually the rear wheels of the motor vehicles (A) are not drive wheels and because the tub can easily be incorporated into the parking lot (2), thus being able to appropriately define the height of the one or more movable parts (5).

According to a configuration which adapts well to the motor vehicles (A) of common use, for each loading bay (10) two modules (40) are installed, each having two roller planes so as to contact the right and left drive wheels of the drive axle of the motor vehicle (A).

With reference to the loading bay (10) of figure 8, the loading and/or unloading procedures can be described by way of example as follows.

The internal operator responsible for the loading and/or unloading makes certain of the docking of the motor vehicle (A) by means of a light signalling system or by visual contact. To start the transfer operations the operator must necessarily open the sectional door (32) and, usually, position the movable footplate (33) on the load floor.

In a preferred embodiment, as soon as the operator lifts the sectional door (32), a detector (81), such as for example an open/closed contact or an endrun stop, informs the control unit (101) of the opening, which determines the passage of the one or more movable parts (5) of the retention system (4) in the first condition, i.e. in the idle condition.

Once all the loading and/or unloading operations have been completed, the operator will proceed to closing the sectional door (32) and thus the detector (81), via the control unit (101), will determine the passage into the second condition so that the motor vehicle (A) can move away from the platform (3).

It is understood that the above has been described by way of non-limiting example and that any constructional variants are possible, provided that they fall within the scope of the present technical solution, as claimed in the following.

## Claims

1. A loading bay (10) for enabling loading and/or unloading of motor vehicles (A) with a load floor and drive wheels, comprising:
- a parking lot (2) configured to accommodate a motor vehicle with a load floor and drive wheels;
- a platform (3) which is raised with respect to the parking lot (2);
- a retention system (4) which comprises one or more movable parts (5) arranged in the parking lot (2) and distanced from the platform (3) so as to support all the drive wheels of the motor vehicle (A) in the parking lot (2), the one or more movable parts (5) being movable in a first condition, so as to limit or prevent a distancing of the load floor from the platform (3), and being blocked in a second condition, so as to enable the movement of the motor vehicle (A);
wherein the retention system (4) comprises a first gear (6), transmission means (7) which connect the rotation of the first gear (6) and the movement of at least a movable part (5) and blocking means (9) which exert an opposing force upon rotation of the first gear (6), the loading bay (10) being **characterised in that**:
- the blocking means (9) comprise a second gear (94) and a hydraulic or pneumatic cylinder (91) which translates the second gear (94) from a first position in which it is disengaged from the first gear (6) and a second position in which it is engaged to the first gear (6);
- in the first condition the second gear (94) is in the first position;
- in the second condition the second gear (94) is in the second position and the hydraulic or pneumatic cylinder (91) opposes the displacement of the second gear (94) induced by the first gear (6).

2. The loading bay (10) of the preceding claim, wherein the first gear (6) is a gearwheel and the second gear (94) is a rack arranged according to the translation direction (X) of the hydraulic or pneumatic cylinder (91).

3. The loading bay (10) of claim 1, wherein the blocking means (9) comprise a first rack (95) arranged according to the translation direction (X) of the hydraulic or pneumatic cylinder (91), wherein the first gear (6) is a first gearwheel and wherein the second gear (94) is a second gearwheel which engages the first rack (95).

4. The loading bay (10) of any one of the preceding claims, wherein the platform (3) comprises a crossing (31) which is configured to enable transit of means and/or persons in an open condition and to prevent transit of means and/or persons in a closed condition and wherein the hydraulic or pneumatic cylinder (91) is configured to translate the second gear (94) into the first position when the crossing (31) passes from the closed condition to the open condition.

5. The loading bay (10) of the preceding claim, wherein the crossing (31) comprises a sectional door (32), wherein the retention system (4) comprises a detector (81) which detects the opening and closing of the sectional door (32) and wherein the hydraulic or pneumatic cylinder (91) translates the second gear (94) on the basis of the detection of the detector (81).

6. The loading bay (10) of any one of the preceding claims, wherein the retention system (4) comprises an alarm (82) and a sensor (83) which detects the position of the second gear (94) and wherein the alarm (82) is configured to activate when in the first condition the second gear (94) is not in the first position.

7. The loading bay (10) of any one of the preceding claims, comprising guides (21) for guiding the wheels of the motor vehicle (A), wherein the one or more movable parts (5) comprises a plurality of rollers (50) and wherein the guides (21) extend in a orthogonal direction to the rotation axes (Y1, Y2) of the plurality of rollers (50).

8. The loading bay (10) of the preceding claim, wherein the transmission means (7) comprise a first chain (71) which connects a first roller (51) of the plurality of rollers (50) to the first gear (6) and a second chain (72) which connects the first roller (51) to a second roller (52) of the plurality of rollers (50).

9. The loading bay (10) of any one of the preceding claims, wherein:
- the retention system (4) comprises a cover (42) and a frame (41) which rotationally supports the first gear (6) and the one or more movable parts (5) connected to the first gear (6) by the transmission means (7);
- the hydraulic or pneumatic cylinder (91) comprises a movable part (92) connected to the second gear (94) and a fixed part (93) which is solidly constrained to the frame (41);
- the frame (41) comprises a tub-shaped part which is sunk into the parking lot (2) with an open side thereof facing upwards;
- the first gear (6) and the blocking means (9) are arranged between the cover (42) and the tub-shaped part so as to be in view with the cover (42) removed.

10. The loading bay (10) of claim 3, wherein:
- the retention system (4) comprises a frame (41) which rotationally supports the first gear (6) and the one or more movable parts (5) connected to the first gear (6) by the transmission means (7);
- the retention system (4) comprises an axle (43) which bears the second gearwheel and the frame (41) comprises a first slot (44) and a second slot (45) which extend in the translation direction (X) of the hydraulic or pneumatic cylinder (91) and which accommodate the axle (43);
- the retention system (4) comprises a connecting bar (46) which is rotationally connected to the axle (43) and the hydraulic or pneumatic cylinder (91) comprises a fixed part (93) which is solidly constrained to the frame (41) and a movable part (92) which is rotationally connected to the connecting bar (46);
- the first rack (95) is solidly constrained to the frame (41).

## Patentansprüche

1. Laderampe (10) (auch Ladebucht genannt), die das Beladen und/oder Entladen von Kraftfahrzeugen (A) mit einer Ladefläche und Antriebsrädern ermöglicht, umfassend:
- einen Parkplatz (2), der für das Aufnehmen eines Kraftfahrzeuges mit einer Ladefläche und Antriebsrädern ausgelegt ist,
- eine Rampe (3), die in Bezug auf den Parkplatz (2) erhöht ist,
- ein Rückhaltesystem (4), das ein oder mehrere bewegliche Teile (5) umfasst, die in dem Parkplatz (2) angeordnet und von der Rampe (3) so beabstandet sind, dass sie alle Antriebsräder des Kraftfahrzeugs (A) in dem Parkplatz (2) abstützen, wobei das eine oder die mehreren beweglichen Teile (5) unter einer ersten Bedingung beweglich sind, um das Wegbewegen der Ladefläche von der Rampe (3) zu begrenzen oder zu verhindern, und unter einer zweiten Bedingung blockiert sind, um die Bewegung des Kraftfahrzeugs (A) zu ermöglichen;
wobei das Rückhaltesystem (4) umfasst: ein erstes Getriebe (6), Übertragungsmittel (7), welche die Drehung des ersten Getriebes (6) und die Bewegung von zumindest einem beweglichen Teil (5) miteinander verbinden, und Blockiermittel (9), die eine der Drehung des ersten Getriebes (6) entgegenwirkende Kraft ausüben, wobei die Laderampe (10) **dadurch gekennzeichnet ist, dass**:
- die Blockiermittel (9) ein zweites Getriebe (94) und einen hydraulischen oder pneumatischen Zylinder (91) umfassen, der das zweite Getriebe (94) von einer ersten Stellung, in der es von dem ersten Getriebe (6) ausgerückt ist, in eine zweite Stellung verschiebt, in der es mit dem ersten Getriebe (6) in Eingriff steht;
- unter der ersten Bedingung das zweite Getriebe (94) die erste Stellung einnimmt;
- unter der zweiten Bedingung das zweite Getriebe (94) die zweite Stellung einnimmt und der hydraulische oder pneumatische Zylinder (91) der durch das erste Getriebe (6) bewirkten Verschiebung des zweiten Getriebes (94) entgegenwirkt.

2. Laderampe (10) nach dem vorhergehenden Anspruch, wobei das erste Getriebe (6) ein Zahnrad ist und das zweite Getriebe (94) eine Zahnstange ist, die entsprechend der Translationsrichtung (X) des hydraulischen oder pneumatischen Zylinders (91) angeordnet ist.

3. Laderampe (10) nach Anspruch 1, wobei die Blockiermittel (9) eine erste Zahnstange (95) umfassen, die entsprechend der Translationsrichtung (X) des hydraulischen oder pneumatischen Zylinders (91) angeordnet ist, wobei das erste Getriebe (6) ein erstes Zahnrad ist und wobei das zweite Getriebe (94) ein zweites Zahnrad ist, das mit der ersten Zahnstange (95) in Eingriff tritt.

4. Laderampe (10) nach einem der vorhergehenden Ansprüche, wobei die Rampe (3) eine Überladebrücke (31) umfasst, die dafür ausgelegt ist, in einem geöffneten Zustand den Durchgang von Fahrzeugen und/oder Personen zu ermöglichen und in einem geschlossenen Zustand den Durchgang von Fahrzeugen und/oder Personen zu verhindern, und wobei der hydraulische oder pneumatische Zylinder (91) dafür ausgelegt ist, das zweite Getriebe (94) in die erste Stellung zu bewegen, wenn die Überladebrücke (31) von dem geschlossenen Zustand in den geöffneten Zustand wechselt.

5. Laderampe (10) nach dem vorhergehenden Anspruch, wobei die Überladebrücke (31) ein Sektionaltor (32) umfasst, wobei das Rückhaltesystem (4) einen Detektor (81) umfasst, der das Öffnen und Schließen des Sektionaltors (32) erkennt und wobei der hydraulische oder pneumatische Zylinder (91) das zweite Getriebe (94) auf Grundlage der Erkennung des Detektors (81) bewegt.

6. Laderampe (10) nach einem der vorhergehenden Ansprüche, wobei das Rückhaltesystem (4) einen Alarm (82) und einen Sensor (83) umfasst, der die Stellung des zweiten Getriebes (94) erkennt und wobei der Alarm (82) dafür ausgelegt ist, ausgelöst zu werden, falls unter der ersten Bedingung das zweite Getriebe (94) nicht in der ersten Stellung ist.

7. Laderampe (10) nach einem der vorhergehenden Ansprüche, umfassend Führungen (21) zum Führen der Räder des Kraftfahrzeugs (A), wobei das eine oder die mehreren beweglichen Teile (5) eine Vielzahl von Rollen (50) umfassen und wobei die Führungen (21) sich in einer zu den Drehachsen (Y1, Y2) der Vielzahl von Rollen (50) orthogonalen Richtung erstrecken.

8. Laderampe (10) nach dem vorhergehenden Anspruch, wobei die Übertragungsmittel (7) eine erste Kette (71) umfassen, die eine erste Rolle (51) der Vielzahl von Rollen (50) mit dem ersten Getriebe (6) verbindet und eine zweite Kette (72), welche die erste Rolle (51) mit einer zweiten Rolle (52) der Vielzahl von Rollen (50) verbindet.

9. Laderampe (10) nach einem der vorhergehenden Ansprüche, wobei:
- das Rückhaltesystem (4) eine Abdeckung (42) und einen Rahmen (41) umfasst, der das erste Getriebe (6) und das eine oder die mehreren beweglichen Teile (5), die mit dem ersten Getriebe (6) mittels der Übertragungsmittel (7) verbunden sind, rotatorisch abstützt;
- der hydraulische oder pneumatische Zylinder (91) einen beweglichen Teil (92) umfasst, der mit dem zweiten Getriebe (94) verbunden ist, und einen feststehenden Teil (93) umfasst, der an dem Rahmen (41) festgelegt ist,
- der Rahmen (41) einen wannenförmigen Teil umfasst, der in dem Parkplatz (2) versenkt angeordnet ist, mit einer nach oben weisenden offenen Seite;
- das erste Getriebe (6) und die Blockiermittel (9) zwischen der Abdeckung (42) und dem wannenförmigen Teil angeordnet sind, so dass sie bei abgenommener Abdeckung (42) sichtbar sind.

10. Laderampe (10) nach Anspruch 3, wobei:
- das Rückhaltesystem (4) einen Rahmen (41) umfasst, der das erste Getriebe (6) und das eine oder die mehreren beweglichen Teile (5), die mit dem ersten Getriebe (6) mittels der Übertragungsmittel (7) verbunden sind, rotatorisch abstützt;
- das Rückhaltesystem (4) eine Achse (43) umfasst, die das zweite Zahnrad trägt, und der Rahmen (41) einen ersten Schlitz (44) und einen zweiten Schlitz (45) umfasst, die sich in der Translationsrichtung (X) des hydraulischen oder pneumatischen Zylinders (91) erstrecken und die Achse (43) aufnehmen;
- das Rückhaltesystem (4) eine Verbindungsstange (46) umfasst, die mit der Achse (43) drehverbunden ist, und der hydraulische oder pneumatische Zylinder (91) einen feststehenden Teil (93), der an dem Rahmen (41) festgelegt ist, und einen beweglichen Teil (92), der mit der Verbindungsstange (46) drehverbunden ist, umfasst,
- die erste Zahnstange (95) an dem Rahmen (41) festgelegt ist.

## Revendications

1. Une baie de chargement (10) permettant le chargement et/ou déchargement de véhicules à moteur (A) présentant un plateau de chargement et des roues motrices, comprenant :
- un parc de stationnement (2) configuré pour accueillir un véhicule à moteur présentant un plateau de chargement et des roues motrices ;
- une plateforme (3) qui est surélevée par rapport au parc de stationnement (2) ;
- un système de retenue (4) qui comprend une ou plusieurs parties mobiles (5) disposées dans le parc de stationnement (2) et espacées de la plateforme (3) de manière à supporter toutes les roues motrices du véhicule à moteur (A) dans le parc de stationnement (2), lesdites une ou plusieurs parties mobiles (5) étant mobiles dans une première condition, pour limiter ou empêcher un éloignement du plateau de chargement de la plateforme (3), et étant bloquées dans une deuxième condition, pour permettre le mouvement du véhicule à moteur (A) ;
dans laquelle le système de retenue (4) comprend un premier engrenage (6), des moyens de transmission (7) qui relient la rotation du premier engrenage (6) et le mouvement d'au moins une partie mobile (5) et des moyens de blocage (9) qui exercent une force antagoniste à la rotation du premier engrenage (6), la baie de chargement (10) étant **caractérisée en ce que** :
- les moyens de blocage (9) comprennent un deuxième engrenage (94) et un vérin hydraulique ou pneumatique (91) qui translate le deuxième engrenage (94) d'une première position dans laquelle il est désengagé du premier engrenage (6) à une deuxième position dans laquelle il est en prise avec le premier engrenage (6) ;
- dans la première condition le deuxième engrenage (94) est dans la première position ;
- dans la deuxième condition le deuxième engrenage (94) est dans la deuxième position et le vérin hydraulique ou pneumatique (91) s'oppose au déplacement du deuxième engrenage (94) induit par le premier engrenage (6).

2. La baie de chargement (10) selon la revendication précédente, dans laquelle le premier engrenage (6) est une roue dentée et le deuxième engrenage (94) est une crémaillère disposée selon la direction de translation (X) du vérin hydraulique ou pneumatique (91).

3. La baie de chargement (10) selon la revendication 1, dans laquelle les moyens de blocage (9) comprennent une première crémaillère (95) disposée selon la direction de translation (X) du vérin hydraulique ou pneumatique (91), dans laquelle le premier engrenage (6) est une première roue dentée et dans laquelle le deuxième engrenage (94) est une deuxième roue dentée qui vient en prise avec la première crémaillère (95).

4. La baie de chargement (10) selon l'une quelconque des revendications précédentes, dans laquelle la plateforme (3) comprend un passage (31) qui est configuré pour permettre le transit de moyens et/ou personnes dans une condition ouverte et pour empêcher le transit de moyens et/ou personnes dans une condition fermée et dans laquelle le vérin hydraulique ou pneumatique (91) est configuré pour translater le deuxième engrenage (94) dans la première position lorsque le passage (31) passe de la condition fermée à la condition ouverte.

5. La baie de chargement (10) selon la revendication précédente, dans laquelle le passage (31) comprend une porte sectionnelle (32), dans laquelle le système de retenue (4) comprend un détecteur (81) qui détecte l'ouverture et fermeture de la porte sectionnelle (32) et dans laquelle le vérin hydraulique ou pneumatique (91) translate le deuxième engrenage (94) sur la base de la détection du détecteur (81).

6. La baie de chargement (10) selon l'une quelconque des revendications précédentes, dans laquelle le système de retenue (4) comprend une alarme (82) et un capteur (83) qui détecte la position du deuxième engrenage (94) et dans laquelle l'alarme (82) est configurée pour s'activer lorsque dans la première condition le deuxième engrenage (94) n'est pas dans la première position.

7. La baie de chargement (10) selon l'une quelconque des revendications précédentes, comprenant des guides (21) pour guider les roues du véhicule à moteur (A), dans laquelle lesdites une ou plusieurs parties mobiles (5) comprennent une pluralité de rouleaux (50) et dans laquelle les guides (21) s'étendent dans une direction orthogonale aux axes de rotation (Y1, Y2) de la pluralité de rouleaux (50).

8. La baie de chargement (10) selon la revendication précédente, dans laquelle les moyens de transmission (7) comprennent une première chaîne (71) qui relie un premier rouleau (51) de la pluralité de rouleaux (50) au premier engrenage (6) et une deuxième chaîne (72) qui relie le premier rouleau (51) à un deuxième rouleau (52) de la pluralité de rouleaux (50).

9. La baie de chargement (10) selon l'une quelconque des revendications précédentes, dans laquelle :
- le système de retenue (4) comprend un couvercle (42) et un châssis (41) qui supporte de façon rotationnelle le premier engrenage (6) et lesdites une ou plusieurs parties mobiles (5) reliées au premier engrenage (6) par les moyens de transmission (7) ;
- le vérin hydraulique ou pneumatique (91) comprend une partie mobile (92) reliée au deuxième engrenage (94) et une partie fixe (93) qui est solidaire du châssis (41) ;
- le châssis (41) comprend une partie en forme de vasque qui est noyée dans le parc de stationnement (2) avec un côté ouvert de celle-ci orienté vers le haut ;
- le premier engrenage (6) et les moyens de blocage (9) sont disposés entre le couvercle (42) et la partie en forme de vasque de manière à être visibles lorsque le couvercle (42) est retiré.

10. La baie de chargement (10) selon la revendication 3, dans laquelle :
- le système de retenue (4) comprend un châssis (41) qui supporte de façon rotationnelle le premier engrenage (6) et lesdites une ou plusieurs parties mobiles (5) reliées au premier engrenage (6) par les moyens de transmission (7) ;
- le système de retenue (4) comprend un axe (43) qui porte la deuxième roue dentée et le châssis (41) comprend une première fente (44) et une deuxième fente (45) qui s'étendent dans la direction de translation (X) du vérin hydraulique ou pneumatique (91) et qui accueillent l'axe (43) ;
- le système de retenue (4) comprend une barre de liaison (46) qui est reliée de façon rotationnelle à l'axe (43) et le vérin hydraulique ou pneumatique (91) comprend une partie fixe (93) qui est solidaire du châssis (41) et une partie mobile (92) qui est reliée de façon rotationnelle à la barre de liaison (46) ;
- la première crémaillère (95) est solidaire du châssis (41) .
